# EUROPÄISCHE PATENTSCHRIFT

(11) **EP 1 364 136 B1**
(45) Veröffentlichungstag und Bekanntmachung des Hinweises auf die Patenterteilung: **06.10.2004**
(21) Anmeldenummer: 02700002.5
(22) Anmeldetag: 19.02.2002
(51) Int. Cl.: F16D 41/22

(54) **FREILAUFKEGELKUPPLUNG FÜR KRAFTFAHRZEUGE**
FREE-WHEELING CONICAL CLUTCH FOR MOTOR VEHICLES
EMBRAYAGE CONIQUE A ROUE LIBRE POUR VEHICULES AUTOMOBILES

(30) Priorität: 01.03.2001 AT 200100326
(43) Veröffentlichungstag der Anmeldung: 26.11.2003
(73) Patentinhaber: Rohrhofer, Friedrich, 3340 Waidhofen an der Ybbs (AT); Rohrhofer, Martin, 3340 Waidhofen an der Ybbs (AT); Rohrhofer, Edeltraud, 3340 Waidhofen an der Ybbs (AT)
(72) Erfinder: Rohrhofer, Friedrich, 3340 Waidhofen an der Ybbs (AT); Rohrhofer, Martin, 3340 Waidhofen an der Ybbs (AT); Rohrhofer, Edeltraud, 3340 Waidhofen an der Ybbs (AT)
(86) Internationale Anmeldenummer: PCT/AT2002/000054
(87) Internationale Veröffentlichungsnummer: WO 2002/070915

(56) Entgegenhaltungen:
- GB-A- 1 354 061
- US-A- 1 922 350
- US-A- 6 041 902

## Beschreibung

Die gegenständliche Erfindung betrifft eine **Freilaufkegelkupplung für Kraftfahrzeuge** zum ständigen oder während der Fahrt zu- und wegschaltbaren Freilaufbetrieb, der in jedem Gang ein Dahinrollen des Fahrzeuges ohne Bremswirkung des laufenden Motors ermöglicht - und zwar bis zu jener Mindestgeschwindigkeit, bei der sich die Drehzahl des angetriebenen Kupplungsteils (2) wieder der im Freilauf geringeren Drehzahl der treibenden Antriebswelle (1) angleicht bzw. leicht unterschreitet. In diesem Moment findet durch eine geringfügige axiale Verschiebung eines Kupplungskegels der nahezu reibungsfreie und gedämpfte Haft- und Formschluß statt. Dieser Haftschluß findet ebenso bei einer Angleichung der Umfangsgeschwindigkeiten durch Erhöhung der Wellendrehzahl bei gleichbleibender Nabendrehzahl statt, also wenn über das Gaspedal die Motor- bzw. Wellendrehzahl erhöht wird, unabhängig von der absoluten Umfangsgeschwindigkeit.

Bekannte Freilaufsysteme (z.B-US-A-1 922 350) finden deshalb oft keine breitere Anwendung, weil sie entweder die Bremssysteme schwererer Fahrzeuge bzw. von Fahrzeugen mit Anhängern überbeanspruchen oder wegen zu aufwendiger Konstruktion. Der gegenständlichen Erfindung liegt die Aufgabe zugrunde, ein Freilaufsystem zu schaffen, welches einen einfachen Aufbau aufweist und insbesondere jederzeit während der Fahrt zu- und weggeschaltet werden kann. Weiters sollen mit dieser Ausführungsform Fahrzeug auch nachgerüstet werden können. Treibstoffeinsparungen sind das Hauptargument für den Einsatz dieser Vorrichtung und je nach Fahrweise unterschiedlich - in sehr kurzer Zeit gewöhnt man sich allerdings daran, das Gaspedal nur dann zu betätigen, wenn das Fahrzeug wirklich beschleunigt werden soll. Über lange Strecken rollt dann das Fahrzeug mit Lehrlaufdrehzahl des Motors, was zu Einsparungen führt, die in absehbarer Zukunft durch keine andere Maßnahme erreicht werden dürften.

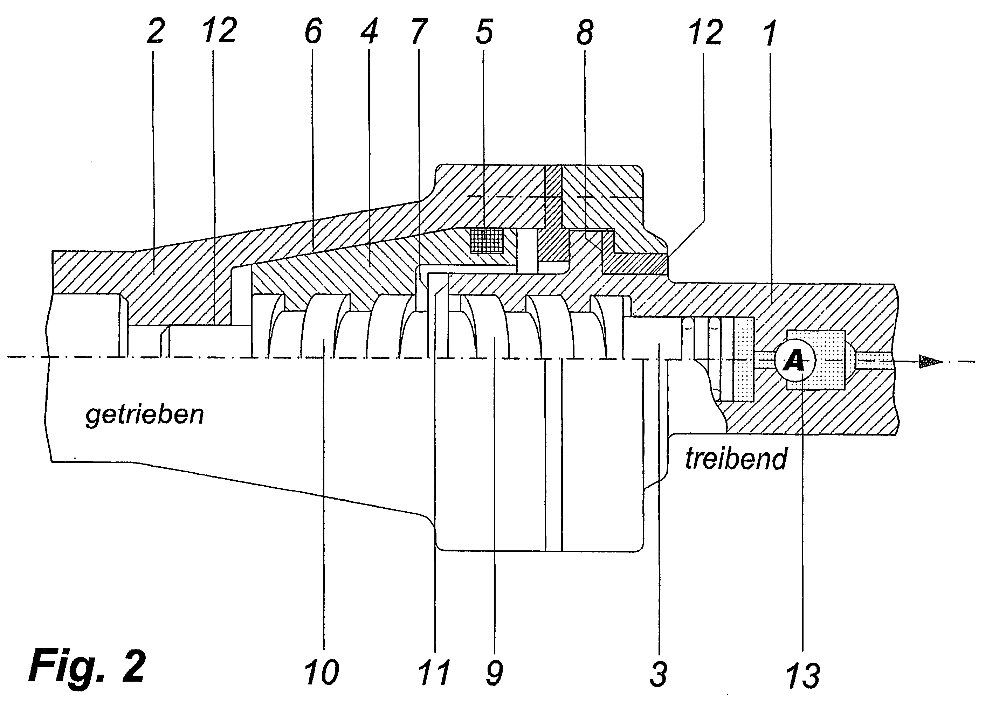

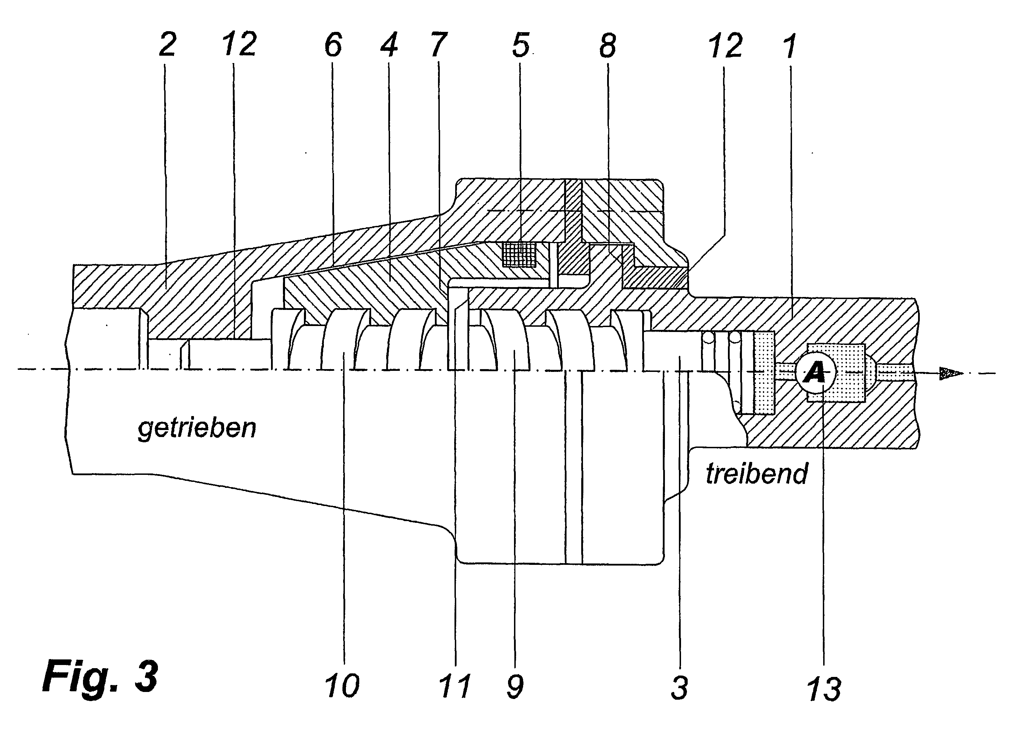

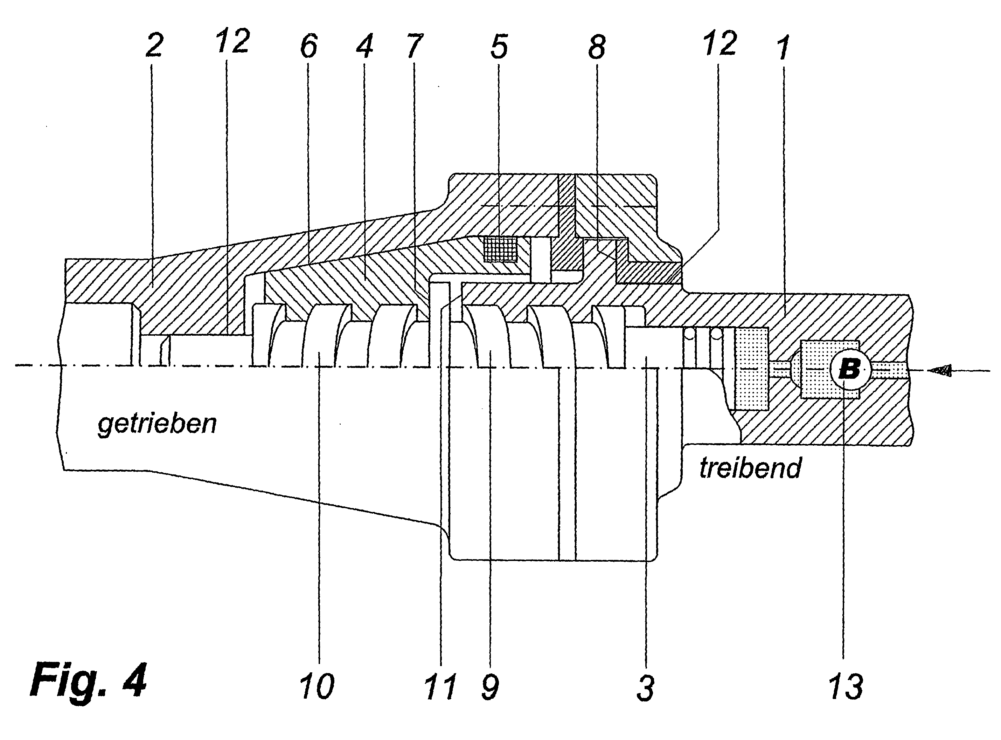

Die Aufgabe wird erfindungsgemäß durch die Merkmale des kenzeichnender Teils des Anspruchs 1 gelöst, wobei im Antriebswellensystem zwischen Getriebe und Antriebsrädem eine Freilaufkupplung angebracht wird, die als zu- und wegschaltbare Ausführungsform grundsätzlich in zwei Wirkstellungen funktioniert. Entweder der Haft- und Formschluß an der Kontaktfläche ist permanent vorhanden (Fig. 4), dann ist keine Beeinträchtigung der bisher üblichen Fahrweise mit Motorbremse gegeben. Oder der Haft- und Formschluß wird über ein Spindelelement (3) geregelt (Fig. 2 und 3), dann ist der oben beschriebene Freilaufbetrieb gewährleistet. Die Umschaltung von "Normalbetrieb" auf "Freilaufbetrieb" erfolgt durch Knopf- oder Hebeldruck (wie bei einem Tempomat). Nach jedem Stillstand des Fahrzeuges muß der "Freilauf" neu aktiviert werden. Die Art des Getriebes, sowie die absolute Fahrgeschwindigkeit spielen dabei keine Rolle.

Der Gegenstand der Erfindung ist in den nachstehenden Zeichnungen anhand zweier Ausführungsbeispiele näher erläutert.
Es zeigen:
- Fig. 1: Eine erfindungsgemäße Kupplung für permanenten Freilaufbetrieb (Schnitt/Ansicht)
- Fig. 2: Eine erfindungsgemäße Kupplung für zu- und wegschaltbaren Freilaufbetrieb in einer ersten Wirkstellung (Freilaufbetrieb) während der Drehmomentübertragung in Hauptantriebsrichtung - hydraulische Steuerung schematisiert dargestellt (Schnitt/Ansicht)
- Fig. 3: Kupplung wie Fig. 2 während des Freilaufes (Schnitt/Ansicht)
- Fig. 4: Kupplung wie Fig. 2 in einer zweiten Wirkstellung mit blockiertem Spindelelement- kein Freilaufbetrieb (Schnitt/Ansicht)

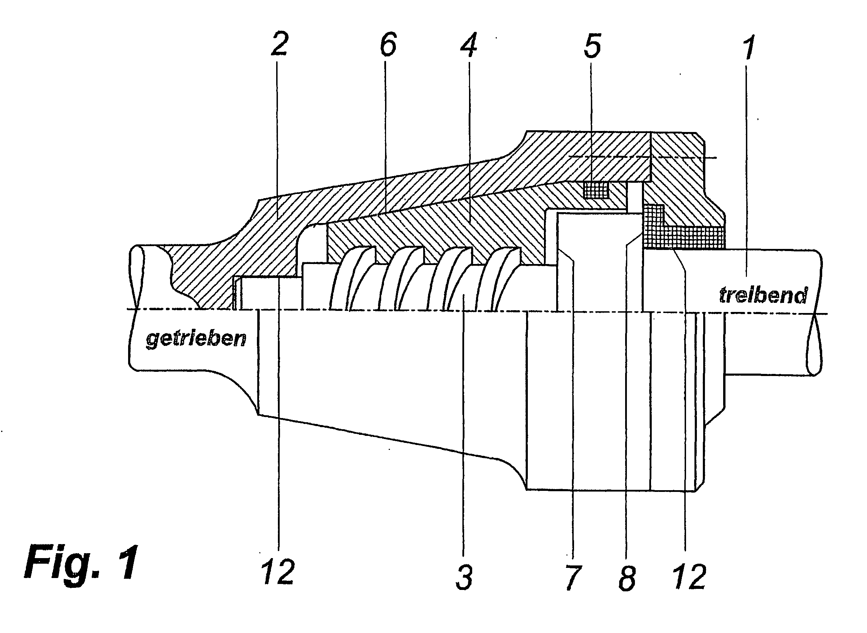

Bei einer Ausführungsform für permanenten Freilaufbetrieb (Fig. 1) ist das Spindelelement (3) fixer Bestandteil der treibenden Welle (1), welche im Kupplungssystem 2-fach gelagert ist (in Fig. 1 als Gleitlager (12) dargestellt). In der Antriebsdrehrichtung wird der Spindelkegel (4) durch das Spindelelement (3) in den Nabenkegel (2) gedrückt. Der Anpreßdruck und somit der Haftschluß wird durch das auftretende Drehmoment geregelt. Sowohl die Kontaktkegelflächen (6), als auch das Spindelelement (3) sind nicht selbsthaftend ausgeführt, wodurch ein Festsaugen verhindert wird. Bei einem geringen Drehmoment entgegen der Hauptantriebsrichtung im Kupplungssystem wird der Spindelkegel (4) durch das Spindelelement (3) axial vom Nabenkegel (2) wegbewegt und gelangt am Anschlag (7) zu einer relativen Ruhelage zum Spindelelement (3). Diese axiale Verschiebung ist durch die tangentiale Einwirkung der Berührungsdichtung (5) sichergestellt. Beginnt nun die Welle (1) die Nabe (2) wieder zu überholen, dann sorgt die Berührungsdichtung (5) wieder für eine axiale Verschiebung des Spindelkegels (4) in Richtung Nabenkegel (2) und den Formschluß zwischen diesen beiden. Die auftretenden Axialkräfte bei der Drehmomentübertragung werden im Kupplungssystem am dämpfenden Axialanschlag (8) ausgeglichen.

Wie aus Fig. 2 bis 4 ersichtlich ist, verleihen der zu- **und wegschaltbaren Ausführungsform** dieser Freilaufkupplung im wesentlichen 5 Bauteile den Charakter einer Freilaufautomatik. Der treibende Wellenteil (1) mit einer Innenspindel versehen, das Spindelelement (3), der Spindelkegel (4), der getriebene Kupplungsteil oder Nabe (2) und die Berührungsdichtung (5) zwischen Spindelkegel (4) und Nabe (2).
Die Funktion ist wie folgt: Bei Steuerstellung A funktioniert diese Ausführungsform genauso wie jene für permanten Freilaufbetrieb in Fig. 1. Aber im Gegensatz dazu verfügt die zuschaltbare Ausführungsform über ein mit der Antriebswelle (1) nicht fix verbundenes Spindelelement (3). Dieses erfüllt hier neben der Funktion der Drehmomentübertragung und der axialen Verschiebung des Spindelkegels (4) auch die Aufgaben, das axiale Spiel des Spindelkegels (4) zu verändern und aufgrund von wellenseitig und nabenseitig gegenläufigen Spindelgängen (9 und 10) Drehmomente eben in beiden Drehrichtungen zu übertragen. Auftretende Axialkräfte werden auch hier am dämpfenden Axialanschlag (8) im Kupplungssystem ausgeglichen.
Wird nun von Steuerstellung A auf Steuerstellung B geschaltet (womit der "Freilauf" weggeschaltet wird) und geschieht dies während der Drehmomentübertragung, so bewirkt dies vorerst gar nichts - das Spindelelement (3) bleibt durch den Spindelgang der Antriebswelle (1) am Anschlag (11) fixiert und der Spindelkegel (4) an der Kontaktkegelfläche (6). Tritt nun erstmals ein Drehmoment entgegen der Hauptantriebsrichtung auf, werden dadurch die axialen Kräfte im Spindelelement (3) umgekehrt wirksam und bei einem Absinken der Wellendrehzahl unter die Nabendrehzahl wird das Spindelelement (3) sofort in Richtung Spindelkegel (4) bewegt, welcher seine Lage nicht verändert. In dieser Lage bleibt nun das Spindelelement (3) bei Steuerstellung B blockiert, womit der Spindelkegel (4) kein axiales Spiel mehr hat und der Haft- und Formschluß an der Kontaktkegelfläche (6) in beiden Drehrichtungen gewährleistet ist. Der Freilaufbetrieb ist unterbunden.

Wird nun während der Drehmomentübertragung wieder auf "Freilaufbetrieb" A geschaltet, wird also die Blockierung des Spindelkegels (4) durch das Spindelelement (3) aufgehoben, rückt dieses sofort wieder in seine ursprüngliche Lage am Anschlag (11) zurück, ohne wiederum die axiale Lage des Spindelkegels (4) zu verändern, ohne also die Drehmomentübertragung zu unterbrechen. Die Fixierung des Spindelelementes (3) in dieser Lage (in Fig.2 bis 4 mit hydraulischer Unterstützung schematisch dargestellt) gewährleistet wieder den beschriebenen Freilaufbetrieb.

Zur wahlweisen Umschaltung zwischen "Normalbetrieb" mit Motorbremse und "Freilaufbetrieb" muß also lediglich ein Steuerelement (13) bewegt werden, welches auch außerhalb des Kupplungssystems angebracht sein kann.

## Patentansprüche

1. Freilaufkegelkupplung mit einer kegelförmigen Kontaktfläche (6) in einer getriebenen Nabe (2) für ein Antriebssystem eines Kraftfahrzeuges, einem Spindelelement (3) und einem Spindelkegel (4) zur Herstellung des Haft- und Formschlusses **dadurch gekennzeichnet, daß** durch eine Berührungs- oder Labyrinthdichtung oder durch einen magnetischen Bauteil (5) der treibende Spindelkegel (4) und die getriebene Nabe (2) über eine Kontaktfläche verfügen, wodurch bei unterschiedlicher Drehzahl von Spindelkegel (4) und Nabe (2) der Spindelkegel (4) am Spindelelement (3) axial verschoben wird.

2. Freilaufkegelkupplung nach Anspruch 1 **dadurch gekennzeichnet, daß** die Berührungs- oder Labyrinthdichtung oder der magnetische Bauteil (5) an einem zylindrischen Schaft des Spindelkegels (4) oder der Nabe (2) angeordnet ist.

3. Freilaufkegelkupplung nach Anspruch 1 **dadurch gekennzeichnet, daß** sowohl das Spindelelement (3) im Zusammenwirken mit dem Spindelkegel (4) als auch die Kontaktkegelflächen (6) an der Nabe (2) und am Spindelkegel (4) nicht selbsthaftend ausgeführt sind, wodurch ein Festsaugen der Kupplung verhindert wird.

4. Freilaufkegelkupplung nach Anspruch 1 bis 3 **dadurch gekennzeichnet, daß** für zu- und wegschaltbaren Freilaufbetrieb das Spindelelement (3) nicht fix mit dem treibenden Kupplungsteil (1) verbunden ist und daß dieses Spindelelement (3) mit zwei gegenläufigen, nicht selbsthemmenden Spindelgängen (9) und. (10 ) versehen ist, wobei ein Spindelgang dem treibenden Kupp/ungsteil (1) zugeordnet ist und der zweite dem Spindelkegel (4).

5. Freilaufkegelkupplung nach Anspruch 1 bis 4 **dadurch gekennzeichnet, daß** der treibende Kupplungsteil (1) und das bewegliche Spindelelement (3) über einen kongruenten Axialanschlag (11) verfügen, an dem diese beiden Bauteile in Steuerstellung A eines Steuerelementes (13) zu einem bleibenden Formschluß gelangen, wodurch das Spindelelement (3) keinen axialen Spielraum mehr hat. (Fig. 2 und 3)

6. Freilaufkegelkupplung nach Anspruch 1 bis 4 **dadurch gekennzeichnet, daß** das bewegliche Spindelelement (3) und der Spindelkegel (4) über einen kongruenten Axialanschlag (7) verfügen, an dem in Steuerstellung B des Steuerelementes (13) bei gleichzeitigem Formschluß an den Kegelflächen (6) das Spindelelement (3) durch mechanische, elektromagnetische oder hydraulische Unterstützung in einer zweien Position fixiert wird, wodurch sowohl der Spindelkegel (4) als auch das Spindelelement (3) keinen axialen Spielraum mehr haben. (Fig. 4)

## Claims

1. An overrunning cone clutch with a conical contact surface (6) for a drive system of a motor vehicle, with a spindle element (3) and with a spindle cone (4) for making the adhesive and positive connection, **characterized in that** the driving spindle cone (4) and the driven hub (2) have a contact surface by virtue of a contact or labyrinth seal or by virtue of a magnetic component (5), with the result that the spindle cone (4) is displaced axially an the spindle element (3) in the event of a different rotational speed of the spindle cone (4) and the hub (2)

2. The overrunning cone clutch as claimed in claim 1 **characterized in that** the contact or labyrinth seal or the magnetic component (5) is arranged on a cylindrical shank of the spindle cone (4) or of the hub (2).

3. The overrunning cone clutch as claimed in claim 1 **characterized in that** neither the spindle element (3), in cooperation with the spindle cone (4), nor the cone contact surfaces (6) on the hub (2) and on the spindle cone (4) are designed to be selfadhesive, with the result that tight suction of the clutch is prevented.

4. The overrunning cone clutch as claimed in claim 1 to 3 **characterized in that**, for cut-in and cut-out freewheeling, the spindle element (3) is not connected fixedly to the driving clutch part (1), and **in that** this spindle element (3) is provided with two oppositely directed spindle flights (9) and (10) which are not self-locking, one spindle flight being assigned to the driving clutch part (1) and the second to the spindle cone (4).

5. The overrunning cone clutch as claimed in claims 1 to 4, **characterized in that** the driving clutch part (1) and the movable spindle element (3) have a congruent axial stop (11), at which these two components come into permanent positive connection in the control position A of a control element (13), whith the result that the spindle element (3) no longer has any axial play. (figs. 2 and 3)

6. The overrunning cone clutch as claimed in claim 1 to 4, **characterized in that** the movable spindle element (3) and the spindle cone (4) have a congruent axial stop (7), at which, in the control position B of the control element (13), the spindle element (13) is fixed in a second position by mechanical, electromagnetic or hydraulic assistance, at the same time with a positive connection at the cone surface (6), with the result that both the spindle cone (4) and the spindle element (3) no longer have any axial play. (fig. 4)

## Revendications

1. Embrayage conique à roue libre doté d'une part d'une surface de contact conique (6) dans un moyeu (2) à entraînement, pour le système d'entraînement d'un véhicule automobile; et d'autre part d'une broche (3) et d'un cône (4) de nez de broche pour la création d'une clôture formée et fixée, **caractérisés par le fait que** grâce à un joint d'étanchéité par contact et un joint labyrinthe, ou bien grâce à un élément composant magnétique (5), le cône de nez de broche moteur (4) ainsi que le moyeu (2) à entraînement disposent d'une surface de contact, de par laquelle, en cas de régimes différents du cône de nez de broche (4) et du moyeu (2), le nez de cône de broche (4) est déplacé de façon axiale à la broche (3).

2. L'embrayage conique à roue libre conformément à la revendication 1 est **caractérisé par le fait que** le joint d'étanchéité par contact ou joint labyrinthe, ou bien encore l'élément composant magnétique (5), sont fixés à une queue cylindrique du cône de nez de broche (4) ou au moyeu (2).

3. L'embrayage conique à roue libre conformément à la revendication 1 est **caractérisé par le fait que** la broche (3) agissant avec le cône de nez de broche (4), ainsi que les surfaces de contact coniques (6), ne sont pas réalisées de façon auto-adhésive avec le moyeu (2) et le cône de nez de broche (4), ce qui évite que le couplage ne soit aspiré.

4. L'embrayage conique à roue libre conformément aux revendications 1 à 3 est **caractérisé par le fait que** pour l'activation et la désactivation du fonctionnement en roue libre, la broche (3) n'est pas reliée de façon fixe au dispositif d'attelage moteur (1 ), et **par le fait que** cette broche (3) est équipée de deux axes munis de palettes contrarotatives ne s'entravant pas (9 e 10), un axe muni de palettes étant attribué au dispositif d'attelage (1), et l'autre au cône de nez de broche 4).

5. L'embrayage conique à roue libre conformément aux revendications 1 à 4 est **caractérisé par le fait que** le dispositif d'attelage moteur (1) et la broche mobile (3) disposent d'une butée axiale congrue (11), pendant laquelle ces deux éléments composants en position de commande A d'un organe de commande (13) parviennent à une clôture formée constante, impliquant que la broche (3) n'ait plus de jeu axial. (Fig. 2 et 3)

6. L'embrayage conique à roue libre conformément aux revendications 1 à 4 est **caractérisé par le fait que** la broche mobile (3) et le cône de nez de broche (4) disposent d'une butée axiale (7), pendant laquelle en position de commande B de l'organe de commande (13) et lors d'une clôture formée identique des surfaces coniques (6), la broche (3) se trouve fixée en une seconde position par une aide mécanique, électromagnétique ou bien hydraulique, action de par laquelle le cône de nez de broche (3) ainsi que la broche n'ont plus aucun jeu axial (Fig. 4)
